Europäisches Patentamt

European Patent Office

Office européen des brevets

(19)

(11) Veröffentlichungsnummer: **0 163 868**
**B1**

(12) **EUROPÄISCHE PATENTSCHRIFT**

(45) Veröffentlichungstag der Patentschrift:
**07.01.88**

(51) Int. Cl.⁴: **G 21 C 19/34**

(21) Anmeldenummer: **85104497.4**

(22) Anmeldetag: **13.04.85**

(54) Unterwasser-Zerkleinerungseinheit.

(30) Priorität: **05.05.84 DE 3416620**

(43) Veröffentlichungstag der Anmeldung:
**11.12.85 Patentblatt 85/50**

(45) Bekanntmachung des Hinweises auf die Patenterteilung:
**07.01.88 Patentblatt 88/1**

(84) Benannte Vertragsstaaten:
**BE CH DE FR LI SE**

(56) Entgegenhaltungen:
EP - A - 0 066 695
DE - A - 2 522 070
DE - A - 2 932 773
DE - U - 7 703 722

TECHNISCHE RUNDSCHAU, Nr. 44, 18 Oktober 1963,
Seite 25-27, Bern, DE; A. HANSEN et al.: "Das
Abschneiden gebrauchter Brennelelemente in Risö"

(73) Patentinhaber: **TRANSNUKLEAR GmbH,
Postfach 11 00 30 Rodenbacher Chaussee 6,
D-6450 Hanau 11 (DE)**

(72) Erfinder: **Luck, Werner, Dipl.-Ing., Am Schlossgarten 45,
D-6460 Gelnhausen 2 (DE)**
Erfinder: **Knichelmann, Winfried, Goethestrasse 8,
D-8757 Karlstein (DE)**

(74) Vertreter: **Nowak, Gerhard, DEGUSSA AG Fachbereich
Patente Rodenbacher Chaussee Postfach 1345,
D-6450 Hanau 1 (DE)**

## Beschreibung

Gegenstand der Erfindung ist eine Unterwasser-Zerkleinerungseinheit für aktivierte oder kontaminierte Komponenten des Cores von Kernreaktoren, wie Vergiftungsstreifen, Incore-Messlanzen, Absorberstäbe, Wasserführungskästen und dergleichen, im wesentlichen aus einer Drück- und Schneideeinheit bestehend, die an einem Rahmen befestigt ist, wobei die Drück- und Schneideeinheit aus einem am Rahmen direkt befestigten Teil, bestehend aus einem Führungstrichterteil und einer Pressbacke, sowie aus einem über einen ansteuerbaren Hydraulikzylinder beweglichen Teil, bestehend aus einem Führungstrichterteil und einer Pressbacke sowie aus einem über einen ansteuerbaren Zylinder separat beweglichen Schneidmesser, zusammengesetzt ist.

Aktivierte oder kontaminierte Komponenten des Cores von Kernraktoren müssen volumensparend zerkleinert werden, ehe sie weiter konditioniert und gelagert werden können. Das volumensparende Zerkleinern solcher Komponenten, wie beispielsweise Vergiftungsstreifen, Incore-Messlanzen, Absorberstäbe, Wasserführungskästen usw., erfolgt aus Sicherheitsgründen unter Wasser.

In dem DE-U 7 703 722 ist eine Anlage beschrieben, bestehend aus einem Gestell mit einer Schneideeinheit in Form einer Schere, einer Drückeinheit in Form einer Presse und einem Führungstrichter, mit der die entsprechenden Core-Komponenten zusammengepresst und zerschnitten werden können. Der Nachteil der beschriebenen Anlage besteht darin, dass sich die zerschnittenen Komponententeile häufig elastisch aufweiten können und somit wieder eine unerwünschte Volumenzunahme erfolgt.

Ursachen dafür sind unterschiedliche Materialkombinationen der Komponenten, Geometrieunterschiede, Verkanten, sowie vor allem auch ein unterschiedlicher Versprödungszustand, bedingt durch den unterschiedlichen Neutronenfluss, dem die Komponenten während des Reaktorbetriebes ausgesetzt sind. Dadurch treten zusätzliche hohe Reibungskräfte auf, die von der Apparatur aufgenommen werden müssen und auch Schmierungsprobleme unter dem Gesichtspunkt der Reinhaltung des Beckenwassers aufwerfen.

Der Erfindung lag daher die Aufgabe zugrunde, eine Unterwasser-Zerkleinerungseinheit für aktivierte oder kontaminierte Komponenten des Cores von Kernreaktoren, wie Vergiftungsstreifen, Incore-Messlanzen, Absorberstäbe, Wasserführungskästen und dergleichen zu schaffen, im wesentlichen aus einer Drück- und Schneideeinheit bestehend, die an einem Rahmen befestigt ist, wobei die Drück- und Schneideeinheit aus einem am Rahmen direkt befestigten Teil, bestehend aus einem Führungstrichterteil, einer Pressbacke und einem Schneidmesser, sowie aus einem über einen ansteuerbaren Hydraulikzylinder beweglichen Teil, bestehend aus einem Führungstrichterteil und einer Pressbacke, sowie aus einem über einen ansteuerbaren Zylinder separat beweglichen Schneidmesser, zusammengesetzt ist. Damit sollten die Komponenten unterschiedlicher Geometrie und unterschiedliche Eigenschaften betriebssicher und volumensparend zerkleinert werden können.

Diese Aufgabe wurde erfindungsgemäss dadurch gelöst, dass sowohl im direkt befestigten Teil als auch im beweglichen Teil zwischen dem jeweiligen Führungstrichterteil und der jeweiligen Pressbacke sich gegenüberliegend in Führungen gelagerte Walzen mit parallelen Achsen befinden, wobei die dem direkt befestigen Teil zugeordnete Walze über einen ansteuerbaren Hydraulikzylinder, eine Kolbenstange und eine Ratsche mit Rücklaufsperre mit dem Rahmen verbunden ist und beide Walzen mittels an ihnen befestigten Ritzeln über eine Kette verbunden sind, wobei die Kette zusätzlich über ein Ausgleichsrad und ein Kettenradspannritzel geführt ist, welches mittels einer Kettenspannfeder ebenfalls am Rahmen befestigt ist.

Aus Gründen der Reinhaltung des Beckenwassers ist der Rahmen vorteilhafterweise verkleidet, und innerhalb des verkleideten Rahmens ist vorzugsweise eine Saugpumpe mit Filter angeordnet. Ebenfalls ist es von Vorteil, wenn vor dem Führungstrichter der Unterwasser-Zerkleinerungseinheit ein Abdichtungsschutz am Rahmen befestigt wird.

Weiterhin ist es günstig, wenn unterhalb der Schneidmesser zum Transport der abgeschnittenen Komponententeile in einen Transferbehälter ein Sammeltrichter angeordnet ist.

Anhand der schematischen Abbildungen I bis VI soll die erfindungsgemässe Unterwasser-Zerkleinerungseinheit beispielhaft näher erläutert werden.

Es zeigen:

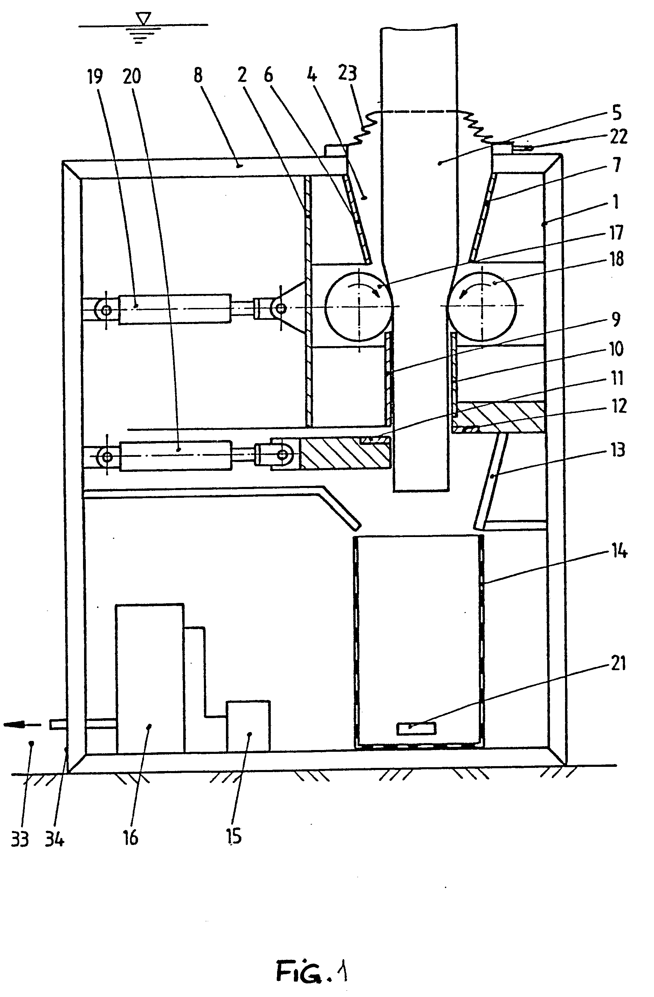

Abbildung 1: Gesamtaufbau der Anlage,

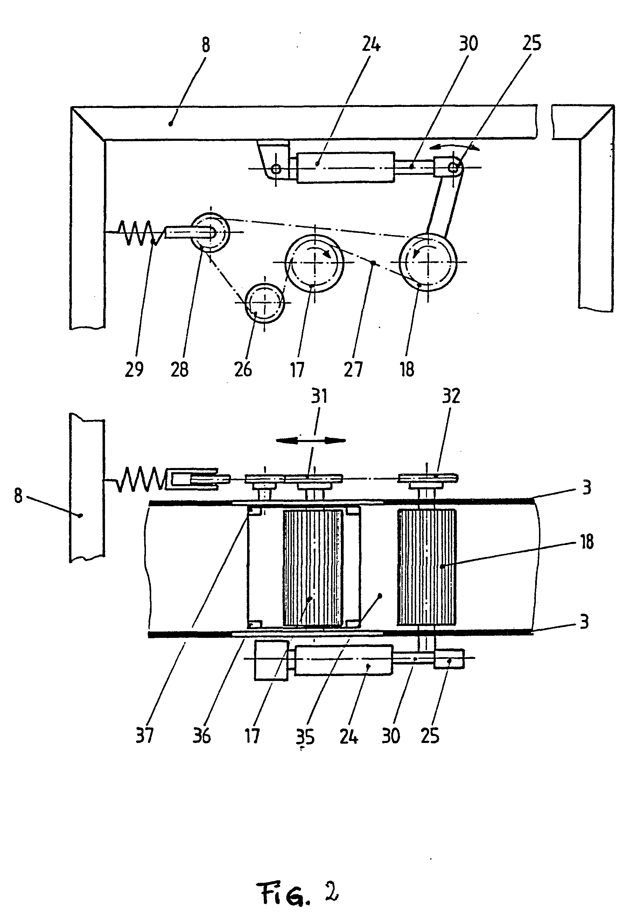

Abbildung 2: Walzenbetrieb im Detail,

Abbildung 3 bis 6: Wirkungsweise der Anlage während der einzelnen Behandlungsschritte der Komponenten.

In einem Wasserbecken 33 befindet sich eine Unterwasser-Zerkleinerungseinheit 34, die aus einem Rahmen 8 aus rostfreiem Stahl besteht, mit rostfreiem Stahlblech verkleidet ist und eine Drück- und Schneideeinheit enthält. Der eine Teil 1 dieser Einheit, bestehend aus einem Führungstrichterteil 7, einer Pressbacke 10 und einem Schneidmesser 12, ist am Rahmen 8 direkt befestigt. Symmetrisch gegenüberliegend ist ein über einen Hydraulikzylinder 19 ansteuerbarer beweglicher Teil 2, bestehend aus einem Führungstrichterteil 6 und einer Pressbacke 9 angeordnet. Ein weiterer ansteuerbarer Zylinder 20 bewegt unterhalb des Teiles 2 separat horizontal ein Schneidmesser 11. Im Zusammenwirken der Schneidmesser 11, 12 erfolgt das Abschneiden von Teilen 21 der Corekomponente 5. Die Zylinder 19, 20 sind ebenfalls am Rahmen 8 befestigt. Sämtliche Hydraulikzylinder können mit Wasser als Hydraulikflüssigkeit gefüllt sein. Dadurch wird eine Verschmutzung des Wasserbeckens durch Hydrauliköl vermieden. Im direkt befestigten Teil 1 und im beweglichen Teil 2 befinden sich zwischen dem jeweiligen Führungstrichterteil 6, 7 und der jeweiligen zugeordneten Pressbacke 9, 10 gegenüberliegend mit paralleler Achse in Führungen 3 gelagerte Walzen 17, 18. Über einen ansteuerbaren Hydraulikzylinder 24, eine Kolbenstange 30 und eine Ratsche 25 mit Rücklaufsperre ist die dem direkt befestigten Teil 1 zugeordnete Walze 18 schrittweise drehbar mit dem Rahmen 8 verbunden. Die Walzen 17, 18 sind in Führungen 3 entsprechend gelagert, wobei der Abstand der Führungen 3 die Breite des Führungsspaltes 35 für die zu zerdrückenden und zu zerkleinernden Corekomponenten 5 darstellt. An der Walze 17 ist ein Ritzel 31 befestigt, an der Walze 18 ebenso ein Ritzel 32. Die Walzen 17, 18 sind mittels der Ritzel 31, 32 über eine Kette 27 verbunden, wobei die Kette zusätzlich über ein Ausgleichsrad 26 und ein Kettenradritzel 28 geführt ist, welches mittels einer Kettenradspannfeder 29 am Rahmen 8 befestigt ist. Dadurch bleibt die Kette 27 gespannt und der synchrone Antrieb der Walzen sichergestellt, wenn der Achsabstand der Walzen 17, 18 sich im Betriebszustand — also beim Pressen bzw. Befördern der durch die Chargieröffnung 4 und dem aus den Teilen 6, 7 gebildeten Führungstrichter in die Unterwasser-Zerkleinerungseinheit gelangten Corekomponente 5 — ändert. Der verkleidete Rahmen 8 enthält eine Saugpumpe 15 und ein Filter 16. Durch Absaugen, Filtrieren und Umwälzen des in der Vorrichtung befindlichen Wassers, das durch Schnittspäne und an der Corekomponente anhaftende radioaktive Verschmutzung (u.a. Oxide) verunreinigt sein kann, bleibt das Beckenwasser sauber. An der Oberseite der erfindungsgemässen Vorrichtung kann ein weiterer Absaugstutzen 22 für Gasblasen (He, Tritium) angeordnet sein. Vor der Chargieröffnung 4 ist ein Abdichtungsschutz 23 am Rahmen 8 befestigt, durch die die Corekomponente 5 gesteckt wird. Antriebe und Leitungen sind — in den Abbildungen nicht dargestellt — mit entsprechenden Einrichtungen ausserhalb des Wasserbeckens 33 verbunden.

Die Schneidmesser 11, 12 sind auswechselbar. Das bewegliche Schneidmesser 11 ist zudem der jeweiligen Form und Stärke der Corekomponente anpassbar. Das gilt ebenfalls für die auswechselbaren Presswalzen 17, 18 und für die Pressbacken 9, 10. Die Oberflächen der Presswalzen 17, 18 und der Pressbacken sind vorzugsweise gehärtet und strukturiert, z.B. geriffelt.

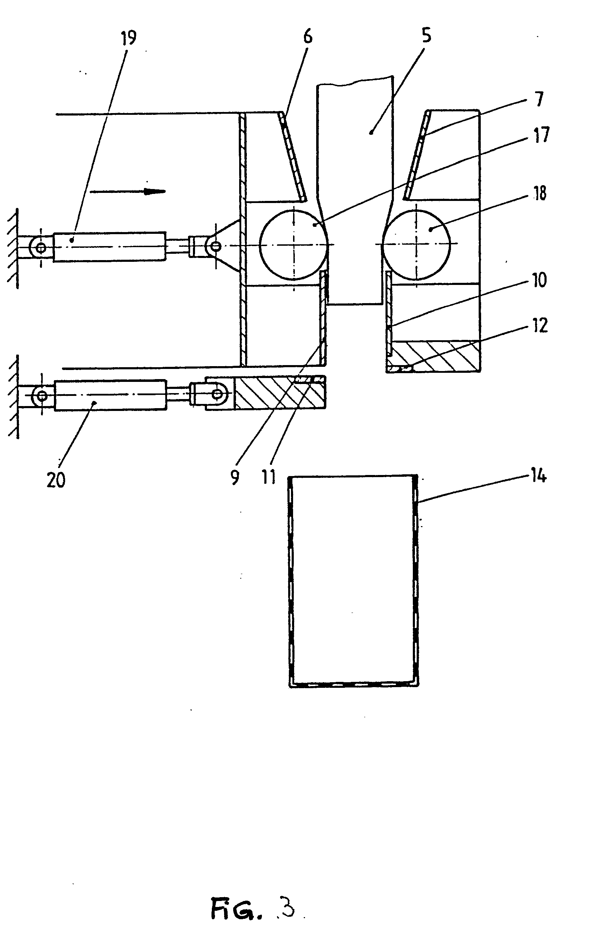

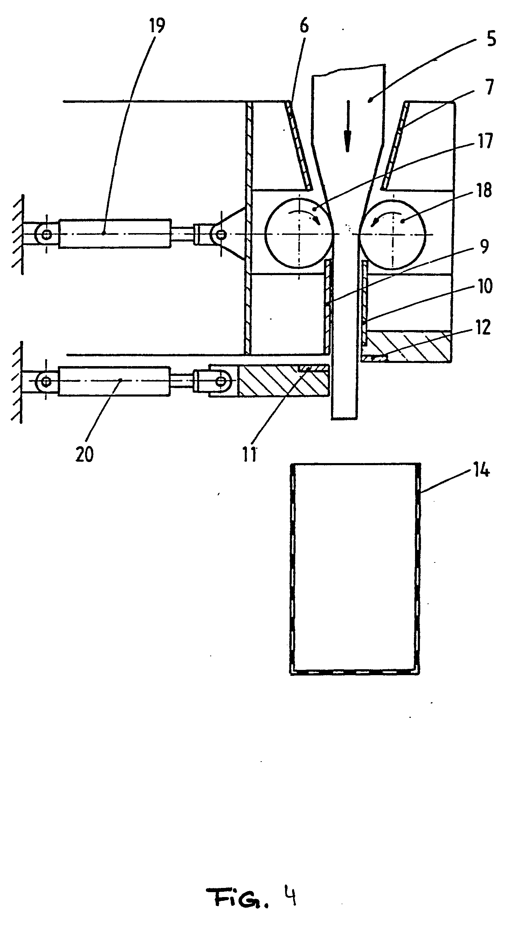

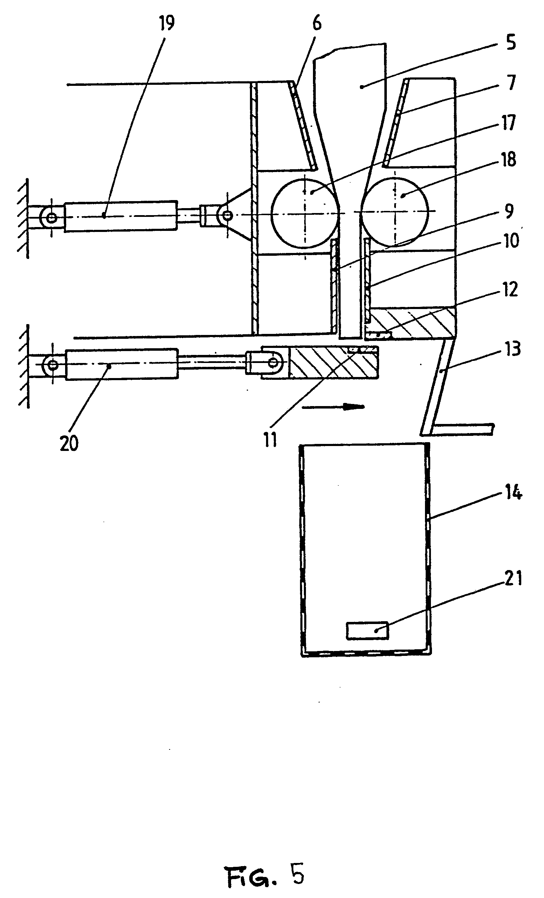

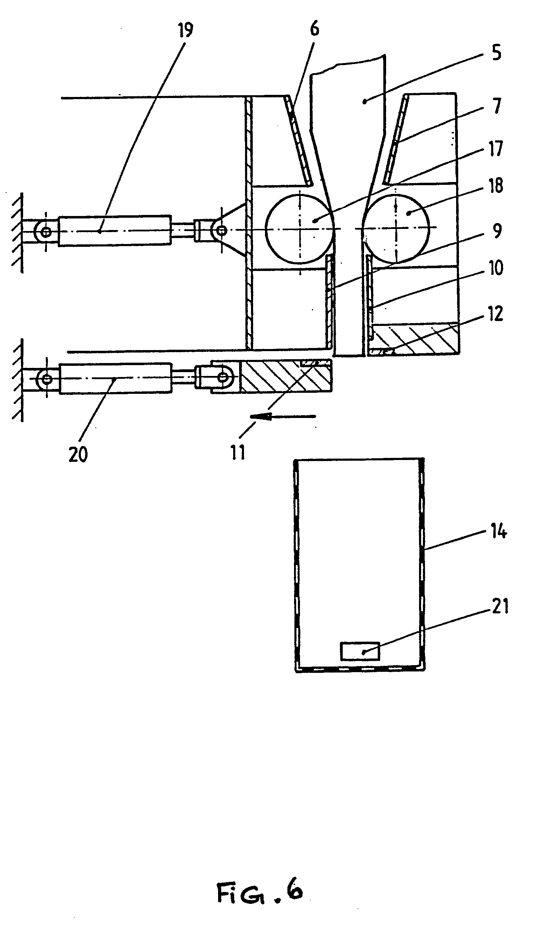

Gemäss den Abbildungen 3 bis 6 wird eine Komponente 5 durch die Chargieröffnung 4 bis etwa in die Mitte der geöffneten Pressbacken geführt. Der Zylinder 19 wird anschliessend mit Wasserdruck beaufschlagt. Dabei wird die Komponente 5 im Bereich der Pressbacken 9, 10 zusammengepresst. Da die Komponente 5 frei beweglich eingeführt wird, erfolgt eine gleichmässige Einschnürung. Die dabei auftretenden Kräfte werden zum Teil über die Walzlager abgegeben, so dass die entstehende Reibung gering ist. Die auftretenden Presskräfte werden über ein Druckmanometer angezeigt. Anschliessend werden die Presswalzen über den Zylinder 24 und die Kette 27 schrittweise betätigt. Die Anzahl der die schrittweise Drehbewegung auslösenden Hübe entspricht der jeweiligen Länge der Komponentenstücke 21. Nach Beendigung der Presswalzenbewegung wird der Zylinder 20 mit Wasser beaufschlagt. Dabei scheren die Schneidmesser 11, 12 ein Stück der gepressten Komponente ab. Durch die Einwirkung sowohl der als Druckspeicher wirkenden Pressbacken als auch der Presswalzen wird ein volumenvergrösserndes Rückfedern der abgeschnittenen Komponentenstücke 21 unterbunden. Letztere fallen durch den Sammeltrichter 13 in den Transferbehälter 14.

Fallweise können entsprechend geeignete Corekomponenten auch ohne Presswalzenvorschub gehandhabt werden.

Nach erfolgter Abtrennung eines Komponentenstückes 21 fährt das Schneidmesser 11 in die Ausgangsposition zurück und bei Beibehaltung der Pressposition der Pressbacken 9, 10 ziehen die Presswalzen 17, 18 entsprechend der gewählten Hubzahl des Zylinders 19 einen weiteren noch nicht verformten Teil der Komponente 5 ein und verformen ihn dabei. Die in Pressstellung verbleibenden Pressbacken 9, 10 wirken der Rückfederung und Verdrillung der durch die Presswalzen 17, 18 bewirkten Verformung der Komponente 5 entgegen.

**Patentansprüche**

1. Unterwasser-Zerkleinerungseinheit für aktivierte oder kontaminierte Komponenten des Cores von Kernreaktoren wie Vergiftungsstreifen, Incore-Messlanzen, Absorberstäbe, Wasserführungskästen, im wesentlichen aus einer Drück- und Schneideeinheit bestehend, die an einem Rahmen befestigt ist, wobei die Drück- und Schneideinheit aus einem am Rahmen (8) direkt befestigten Teil (1), bestehend aus einem Führungstrichterteil (7), einer Pressbacke (10) und einem Schneidmesser (12), sowie aus einem über einen ansteuerbaren Hydraulikzylinder (19) beweglichen Teil (2), bestehend aus einem Führungstrichterteil (6) und einer Pressbacke (9), sowie aus einem über einen ansteuerbaren Zylinder (20) separat beweglichen Schneidmesser (11), zusammengesetzt ist, dadurch gekennzeichnet, dass sowohl im direkt befestigten Teil (1) als auch im beweglichen Teil (2) zwischen dem jeweiligen Führungstrichterteil (6, 7) und der jeweiligen Pressbacke (9, 10) sich gegenüberliegend in Führungen (3) gelagerte Walzen (17, 18) mit parallelen Achsen befinden, wobei die dem direkt befestigten Teil (1) zugeordnete Walze (18) über einen ansteuerbaren Hydraulikzylinder (24), eine Kolbenstange (30) und eine Ratsche (25) mit Rücklaufsperre mit dem Rahmen (8) verbunden ist und beiden Walzen (17, 18) mittels an ihnen befestigten Ritzeln (31, 32) über eine Kette (27) verbunden sind, wobei die Kette (27) zusätzlich über ein Ausgleichsrad (26) und ein Kettenradspannritzel (28) geführt ist, welches mittels einer Kettenspannfeder (29) ebenfalls am Rahmen (8) befestigt ist.

2. Unterwasser-Zerkleinerungseinheit nach Anspruch 1, dadurch gekennzeichnet, dass der Rahmen (8) verkleidet ist.

3. Unterwasser-Zerkleinerungseinheit nach Anspruch 1 und 2, dadurch gekennzeichnet, dass innerhalb des verkleideten Rahmens (8) eine Saugpumpe (15) mit Filter (16) angeordnet ist.

4. Unterwasser-Zerkleinerungseinheit nach den Ansprüchen 1 bis 3, dadurch gekennzeichnet, dass unterhalb der Schneidmesser (11, 12) zum Transport der abgeschnittenen Komponententeile (21) in einen Transferbehälter (14) ein Sammeltrichter (13) angeordnet ist.

5. Unterwasser-Zerkleinerungseinheit nach den Ansprüchen 1 bis 4, dadurch gekennzeichnet, dass vor dem Führungstrichter (6, 7) ein Abdichtungsschutz (23) am Rahmen (8) befestigt ist.

## Claims

1. Underwater crushing unit for activated or contaminated components from the core of nuclear reactors such as poison strips, in core measuring lances, absorber rods, water guide tanks, consisting substantially of a pressing and cutting unit which is fixed on a frame, wherein the pressing and cutting unit is made up of a part (1) which is fixed directly on the frame (8) and consists of a guide funnel member (7), a pressing jaw (10) and a cutting blade (12) and also of a part (2) which can be moved via a driveable hydraulic cylinder (19) and consists of a guide funnel member (6) and a pressing jaw (9) and also of a cutting blade (11) which can be moved separately via a driveable cylinder (20), characterised in that rollers (17, 18) with parallel shafts which are mounted opposite one another in guides (3) are located both in the directly fixed part (1) and in the moving part (2) between the respective guide funnel member (6, 7) and the respective pressing jaw (9, 10), wherein the roller (18) allocated to the directly fixed part (1) is connected via a driveable hydraulic cylinder (24), a piston rod (30) and a ratchet (25) with return stop to the frame (8) and the two rollers (17, 18) are connected by means of pinions (31, 32) fixed on them via a chain (27), the chain (27) additionally being guided via a compensating wheel (26) and a chain wheel clamping pinion (28) which is also fixed on the frame (8) by means of a chain tension spring (29).

2. Underwater crushing unit according to claim 1, characterized in that the frame (8) is cased.

3. Underwater crushing unit according to claims 1 and 2, characterized in that a suction pump (15) with filter (16) is arranged inside the cased frame (8).

4. Underwater crushing unit according to claims 1 to 3, characterized in that a collecting hopper (13) is arranged below the cutting blades (11, 12) for conveying the offcut component parts (21) into a transfer container (14).

5. Underwater crushing unit according to claims 1 to 4, characterized in that a seal protector (23) is fixed on the frame (8) in front of the guide hopper (6, 7).

## Revendications

1. Unité de concassage sous-marine pour composants du «coeur» activés ou contaminés, de réacteurs nucléaires comme par exemple des bandelettes d'intoxication, des coffres de conduites d'eau, des lances de mesure de l'intérieur du «coeur», des bâtonnets d'absorbeurs, consistant essentiellement en une unité de pression et en une unite de coupe, fixée à un cadre par lequel l'unité de pression et l'unité de coupe formés d'une partie (1) solidarisée directement au cadre (8) consistant en une position (7) d'entonnoir de commandes, d'une mâchoire de presse (10) et d'un couteau de découpe (12) ainsi que d'une portion mobile par l'intermédiaire d'un cylindre hydraulique (19) que l'on peut approcher, consistant en une portion en entonnoir de commande (6) et en une mâchoire de presse (9), ainsi que d'un couteau de découpe (11) séparément déplaçable par l'intermédiaire d'un cylindre (20) que l'on peut approcher, sont réunis, caractérisée en ce que, aussi bien dans la partie directement fixée (1) que dans la partie mobile (2) entre les parties respectives d'entonnoir des commandes (6, 7) et des mâchoires de presse respectives (9, 10), on trouve des rouleaux placés sur les conduites (3) d'une manière opposée selon des axes parallèles, par lesquels le rouleau (18) disposé sur la partie directement fixée (1) est relié au cadre (8) par l'intermédiaire d'un cylindre hydraulique (24) qui peut s'approcher, une bielle de piston (30) et un tourniquet (25) avec barrière de retour, et les deux rouleaux (17, 18) sont reliés au moyeu de pignons (31, 32) qui y sont fixés, à une chaîne (27) dans laquelle la chaîne en addition est dirigée par une roue d'équilibrage (26) et par un pignon de tension de roue à chaîne (28) lequel au moyen d'un ressort de tension de chaîne (29) est également fixé au cadre (8).

2. Unité de concassage sous-aquatique selon la revendication 1, caractérisée en ce que le cadre (8) est garni.

3. Unité de concassage sous-aquatique selon la revendication 1 ou 2, caractérisée en ce que, à l'intérieur du cadre (8) garni, on dispose une pompe aspirante (15) avec un filtre (16).

4. Unité de concassage sous-aquatique selon les revendications 1 à 3, caractérisée en ce qu'endessous des couteaux de découpe (11, 12) un entonnoir collecteur est disposé pour le transport des fragments de composants (21) découpés, dans un récipient de transfert (14).

5. Unité de concassage sous-aquatique selon les revendications 1 à 4, caractérisée en ce que devant l'entonnoir de commande (6, 7) une protection d'étanchéité (23) est fixée au cadre (8).

FIG. 1

FiG. 2

FIG. 3

FIG. 4

FIG. 5

FIG.6